# EUROPEAN PATENT SPECIFICATION

(11) **EP 1 076 196 B1**
(45) Date of publication and mention of the grant of the patent: **29.09.2004**
(21) Application number: 00306689.1
(22) Date of filing: 07.08.2000
(51) Int. Cl.: F16K 35/10

(54) **Shield assembly**
Abdeckanordnung
Assemblage de recouvrement

(30) Priority: 07.08.1999 GB 9918562
(43) Date of publication of application: 14.02.2001
(73) Proprietor: Smith Flow Control Limited, Witham, Essex CM8 3YQ (GB)
(72) Inventor: McHugh, Harry, St. Neots, Cambridgeshire PE19 3HH (GB)
(74) Representative: Gillam, Francis Cyril

(56) References cited:
- FR-A- 2 437 558
- GB-A- 2 292 207
- GB-A- 2 320 082
- US-A- 4 984 667
- US-A- 5 632 301

## Description

This invention relates to a shield assembly for a rotatable component projecting from a housing, such as an operating component (e.g. a hand-wheel or part of a hand-wheel or a shaft on which a hand-wheel may be mounted) projecting from a valve housing. The invention further relates to a lock assembly, or in preferred aspects an interlock assembly, for a rotatable component such as a hand-wheel (or part of a hand-wheel or a shaft on which a hand-wheel may be mounted) projecting from a valve housing. The invention also extends to a valve whenever fitted with a lock or interlock assembly of this invention.

Though it will be appreciated that the shield assembly may be used in connection with components other than valve operating hand-wheels, levers or shafts, a principal application for this invention is to provide a shield over a valve hand-wheel, or a remaining part of a valve hand-wheel, following removal of the peripheral region thereof, or even over the operating shaft of a valve, following complete removal of the hand-wheel. Consequently, the invention will in the following be described expressly in relation to valves having operating components typically in the form of a hand-wheel or shaft, though it is to be understood that the invention is not to be regarded as limited to this use.

A known form of valve often employed in pipe-lines, chemical processing plants and other areas of industry has a valve body in which is located a valve member able to close and open a passageway through the valve body. In the case of a so-called rising stem valve, the valve member is secured to a threaded stem which projects through a seal mounted on the valve body, usually provided in a component referred to as a bonnet or top-works, which latter term will be used hereinafter. A hand-wheel has a threaded bore engaged with the stem and is rotatably secured to the valve body, at the end of the top-works remote from the body. Rotation of the hand-wheel causes the stem to rise and fall (i.e. project more or less) with respect to the body, so respectively opening and closing the passageway. Other designs include ball valves where a ball with an internal passageway may be rotated through 90° to open and close the valve, and gearbox valves where a reduction gear is provided for the hand-wheel shaft, to increase the mechanical advantage for operating the valve member. In the case of these other designs, a projecting shaft for the hand-wheel usually is provided with a square or hexagon driving form, with which a corresponding opening in the hand-wheel engages.

In many industries, it is desirable for a valve to be locked in a given setting, usually either fully open or fully closed, in order to ensure safety in operation of a plant within which the valve is incorporated. At its simplest, this can be achieved by means of a padlock and chain, with the chain passing around a pipe and through an aperture in the valve hand-wheel. Unfortunately, there is no guarantee that an operator will properly have locked a valve against unauthorised operation just because the operator returns to a central store the key for the padlock; either deliberately or in error, the chain may not be passed properly around a pipe and through an aperture in the hand-wheel prior to having its ends secured together by means of the padlock and thus the valve may subsequently be operated without first unlocking the chain.

In an attempt to address this problem, various complex mechanisms have been designed for locking the hand-wheel of a valve, in a fail-safe manner. Some of these mechanisms are simple locks requiring the presence of a key to permit valve operation but may be modified to permit key removal only when the valve is at one or perhaps two pre-defined settings. Alternatively, a so-called interlock mechanism may be employed, which requires two keys arranged so that both keys must be present for operation of the valve, and only when the valve is fully open may one key be removed, the other key being removable only when the valve is fully closed. In this way, it is possible to ensure that several valves all having similar interlock mechanisms may be operated only in a pre-defined order.

A recognised problem associated with fitting a valve with a lock mechanism is that no significant modification may be made to the valve body or top-works if warranties on the valve are not to be voided. Thus, if a valve is to be fitted with a lock mechanism, it is in general necessary to know the precise design of that valve in order that a suitable lock-mechanism may be manufactured and then fitted, expressly to suit that valve.

It clearly is advantageous to have a lock mechanism which may be adjusted so as to fit a wide variety of valves with only a minimum of modification (if any) to the valve. With this in mind, a system has been developed whereby the outer peripheral part of the valve hand-wheel may be removed (which does not affect the warranty on the valve), and then a first part of a lock or interlock mechanism is secured to the remaining central part of the hand-wheel, the second part of the lock or interlock mechanism bridging the remaining central part of the hand-wheel so as to engage the valve housing or top works. In this way, the second part may be held against rotation with respect to the valve body, and the remaining part of the hand-wheel may be locked to that second part as required. The first part of the lock mechanism is provided with a valve operating member, such as an auxiliary hand-wheel, an operating lever or the like.

For an arrangement as described just above, It is still usually possible to gain access to the cut-off part of the hand-wheel or the securing arrangement for that hand-wheel to the rotatable shaft projecting from the housing. This can compromise security, and also can represent a safety hazard, especially if the outer periphery of the hand-wheel has been separated from the remaining part, for example by an angle-grinder, which tends to leave sharp edges. The present invention aims at improving on these known arrangements, so as to enhance security as well as operator safety.

Accordingly, one aspect of this invention provides a shield assembly for a rotatable component projecting from a housing and having a central hub, which shield assembly comprises a cover portion adapted in use to overlie the radial extent of the component on the side thereof remote from the housing and a rim portion adapted in use to surround the component, at least three springloaded plungers mounted on the cover portion for substantially radial movement and adapted in use to engage the hub under the action of the spring loading, and each plunger having screw-threaded locking means for locking the plunger in its hub-engaging position, with the shield assembly substantially co-axial with the rotatable component.

The provision of at least three (but possibly more than three) spring loaded plungers allows the cover portion of the shield assembly to be mounted substantially co-axially with the rotatable component. This is achieved by allowing the cover portion to find its natural centre when the plungers all engage the central part of the rotatable component under their spring loadings, and then using the locking means to secure the cover portion in its centred position. This facilitates the mounting of the cover portion over the rotatable component.

Moreover, in the event that the outer surface of the central hub is not strictly concentric with the axis of the rotatable component, the spring loading of the plungers allows the cover portion properly to be centralised. In the case of a rising stem valve, the rotatable component could be a complete hand-wheel, or preferably the central part of a valve operating hand-wheel, with the peripheral part somewhat roughly cut off, for example with an angle grinder. In this case, any lack of concentricity in the outer edges of the remaining part of the hand-wheel will be of no consequence, since the outer edges are not used for centring the cover. In the case of a ball valve or a gearbox valve, the rotatable component may be the projecting shaft which has a suitable form for receiving a hand-wheel but the hand-wheel is removed so that the plungers may pick-up directly on that form which thus serves as said hub.

In a preferred embodiment, the plungers are mounted on a base plate which is itself connected to the cover portion. Such a base plate may have a plurality of radially-extending T-shaped grooves in at least some of which are received respective plungers. For example, there may be eight such grooves, disposed at suitable angles so that the base plate may accommodate three, four or six plungers, with equal angular spacings. This permits the use of the base plate with a wide variety of valve hand-wheels or other operating components, which themselves may have spoke arrangements of different configurations.

The screw-threaded locking means for each plunger may comprise a threaded rod received in a threaded bore provided in the base plate, so that the rod will move radially upon rotation, the radially inner end of the rod being engageable with the respective plunger. The threaded bore may be provided by a captive nut and a helical compression spring may surround the rod, to act between the plunger and the base plate.

In the preferred form of shield assembly as described above and when used with a rising stem valve, the remaining part of a valve hand-wheel may be clamped between the base plate and the cover portion, for example by means of bolts extending across the remaining part of the hand-wheel, or possibly through holes formed in that remaining part. Thus, the base plate will be disposed between the remaining part of the hand-wheel and the valve housing, and the cover plate on the other side of the remaining part of the hand-wheel.

According to a second aspect of this invention, there is provided a valve lock mechanism comprising first and second relatively movable co-axial parts, a shield assembly of this invention as described above which is coupled to the first part of the lock mechanism and is adapted in use to connect the rotatable component to said first part, a bridging assembly coupled to the second part of the lock mechanism and extending over the rim portion of the shield assembly, and engagement means for connecting the bridging assembly to the housing to restrain relative rotation of the bridging part and the housing, the first and second parts being securable against relative rotation by use of a key configured for use with the lock mechanism.

The bridging assembly may include a ring which surrounds with running clearance the rim portion of the shield assembly. In this case, the ring may have a disc disposed between the base plate of the shield assembly and the housing, which disc carries the engagement means for engaging the housing to restrain the second part of the lock mechanism against rotation. Preferably, such engagement means is adjustably mounted on the disc, for example by providing a generally radial slot in the disc in which slot an abutment is slidably arranged, the abutment serving to engage a suitable part of the housing.

The ring may be coupled to the second part of the valve lock mechanism by means of at least one arm, but preferably a pair of diametrically opposed arms, connected at one end to the ring, and at the other end to the lock mechanism.

This invention extends to a valve whenever fitted with a lock mechanism, or interlock mechanism, of this invention as described above.

By way of example only, one specific embodiment of shield assembly of this invention will now be described in detail, reference being made to the accompanying drawings in which:-
Figure 1 is a vertical cross-section through the shield assembly and interlock mechanism (which latter is shown diagrammatically), as connected to a fluid flow control valve;
Figure 2 is an isometric view of a shield assembly with the cover portion separated from the plunger assembly;
Figure 3 is an isometric view of the plunger assembly;
Figure 4 is an isometric view from the underside, of the complete interlock mechanism including the shield assembly;
Figure 5 shows two elements of a ring forming a part of a bridging assembly;
Figure 6 is an isometric view of a disc of the bridging assembly together with an adjustable abutment; and
Figure 7 shows the interlock mechanism together with a pair of arms for coupling the lock mechanism to the ring of Figure 5.

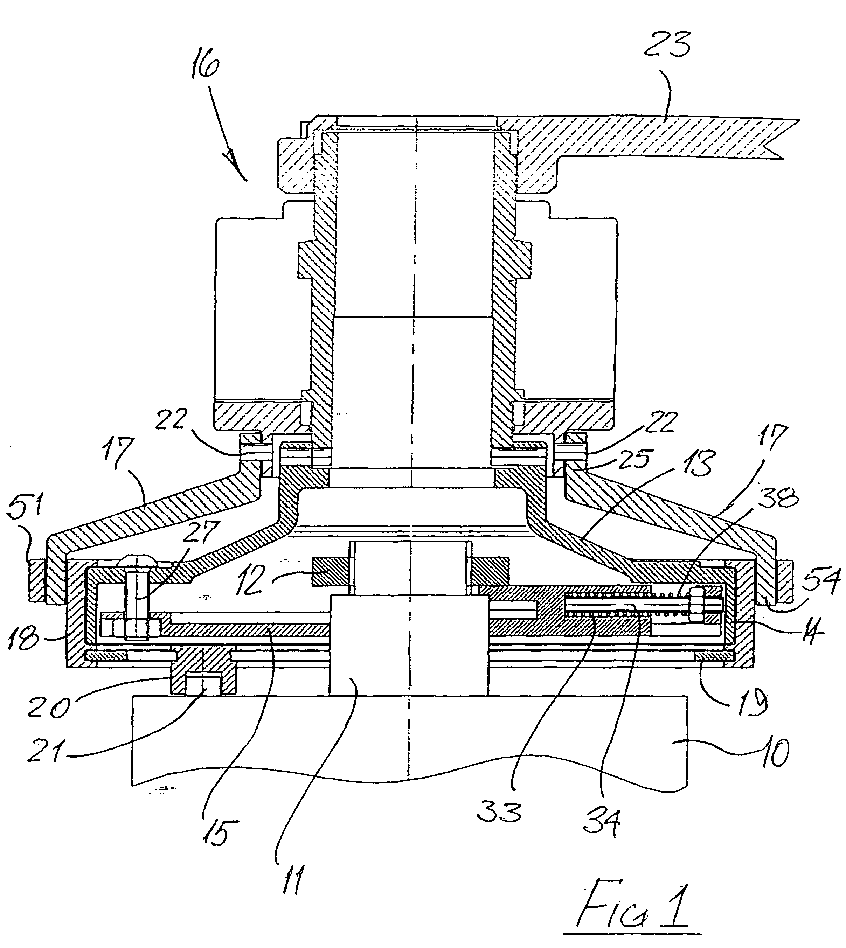

Referring initially to Figure 1, there is shown a part 10 of the top-works of a valve housing, from which projects a rotatable component in the form of a stub shaft 11 of a square or hexagonal section, and a threaded portion carrying a nut 12. Normally, a hand-wheel (not shown) may be secured to that section and which is held in place by nut 12, but for the fitting of the interlock mechanism that hand-wheel is removed in its entirety to expose the square section. A shield assembly is connected to the stub shaft 11, which shield assembly comprises a cover portion 13 having a downwardly depending rim portion 14 and a base plate 15.

A first part of an interlock mechanism 16 is mounted on the upper end of the cover portion 13, the mechanism also being connected to the valve housing top-works by means of a bridging assembly including a pair of arms 17, a ring 18 and a lower disc 19 provided with an engagement socket 20. The socket receives the head 21 of a bolt projecting from the top-works so as thereby to restrain the disc against rotation, which in turn prevents rotation of the ring 18 and arms 17 and so also the second part of the interlock mechanism, to which the arms are connected by means of pins 22.

The first part of the interlock mechanism is provided at its upper end with an operating lever 23, by means of which the shield assembly may be rotated when the interlock mechanism has been freed. By virtue of the connection between the shield assembly and the rotatable component (stub shaft 11), in turn that component will be rotated by movement of the operating lever 23, so actuating the valve.

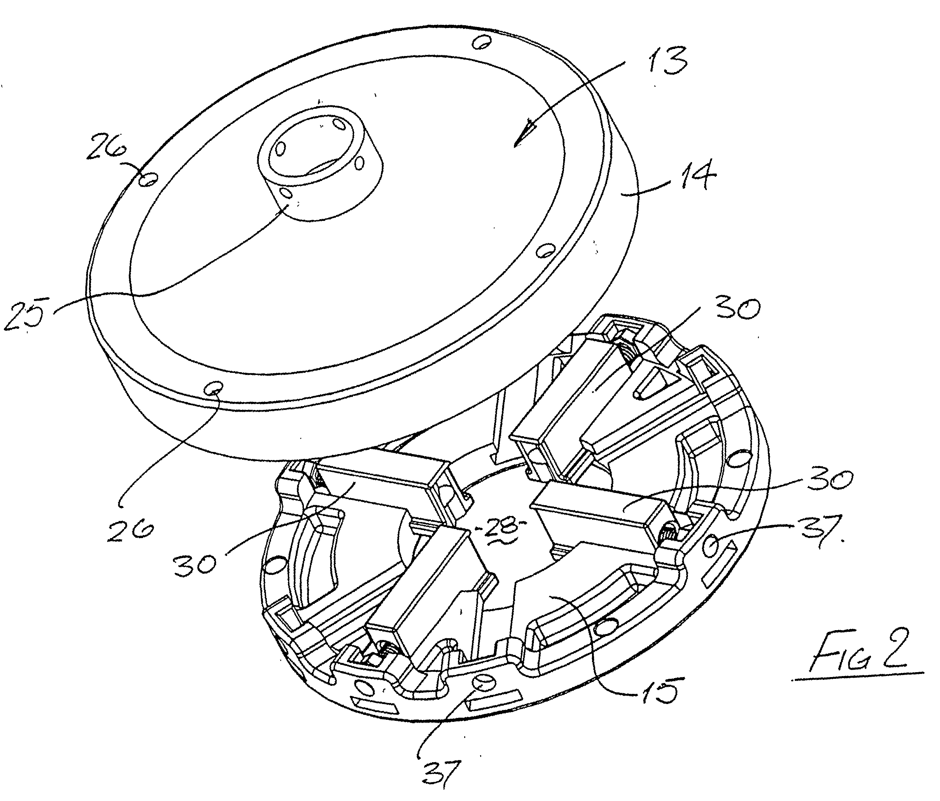

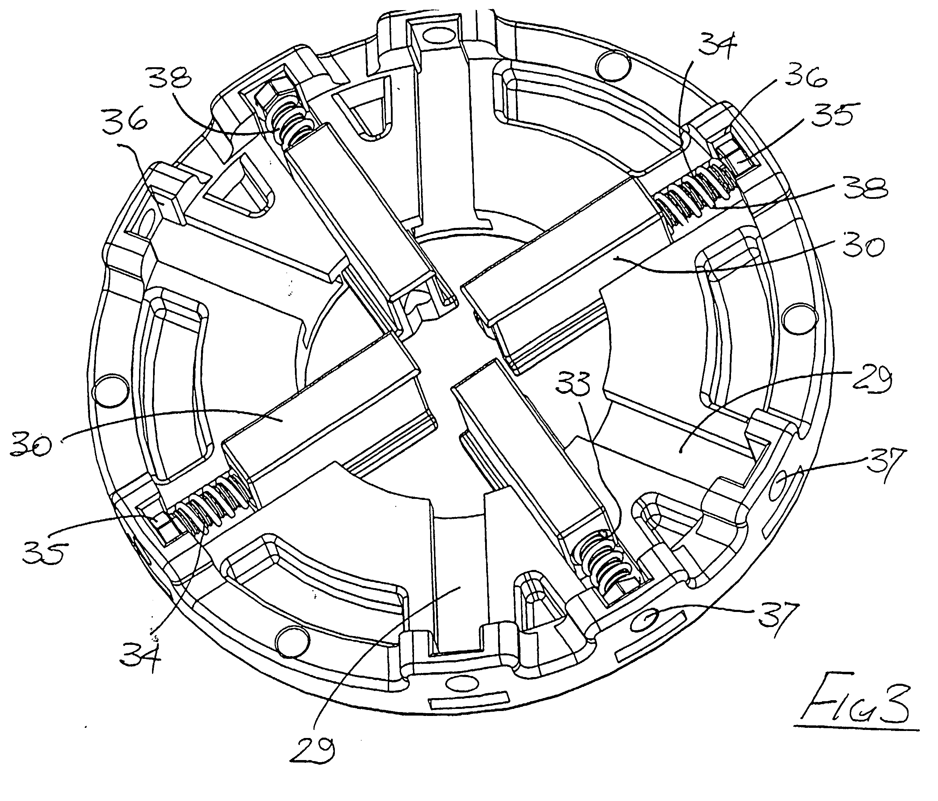

Figures 2 and 3 show in more detail the shield assembly described above. The cover portion 13 is provided with a central boss 25 by means of which the cover portion is secured to the first part of the interlock mechanism. Around the periphery of the cover portion are provided four holes 26, through which are passed bolts 27 (see also Figure 1) clamping together the cover portion and the base plate 15. The rim portion 14 depends downwardly from the cover portion so as closely to encircle the periphery of the base plate, as shown in Figure 1.

The base plate has a central opening 28 from which radiate eight T-shaped slots 29. As shown in Figures 2 and 3, four plungers 30 are slidably mounted in four of those slots, though other numbers of plungers could be used, in which case the appropriate slots are selected to ensure the plungers are angularly equi-spaced. In this embodiment, selection of suitable slots permits the base plate to be used with three, four or six plungers.

Each plunger 30 is formed at its radially inner end with a jaw 32 adapted to engage the square section of the stub shaft 11. The jaws are configured so as to be capable of engaging various rotatable components having different forms and in this case those jaws have a V-shaped profile, as best seen in Figure 3. The radially outer end of each plunger has an axial bore 33 in which is received a screw-threaded rod 34, threaded into a nut 35 held captive in a recess 36 in the peripheral wall of the base plate. The outer end of each rod 34 is formed with a square shank which may be driven by a suitable tool inserted through an opening 37 in the peripheral wall of the base plate. During installation, each rod 34 is in the form of a hex-headed bolt with the head external to the base plate and the bolt extending through an opening 37 in the peripheral wall of the base plate. Following installation, the head of each bolt is cropped off, close to the peripheral wall of the base plate so leaving only the threaded part of each bolt in place. Each jaw is spring-urged radially inwardly by means of a respective helical coil spring 38, arranged over the rod 34 and acting between the end of the bore 33 in the respective plunger 30 and the nut 35 into which the respective rod is threaded.

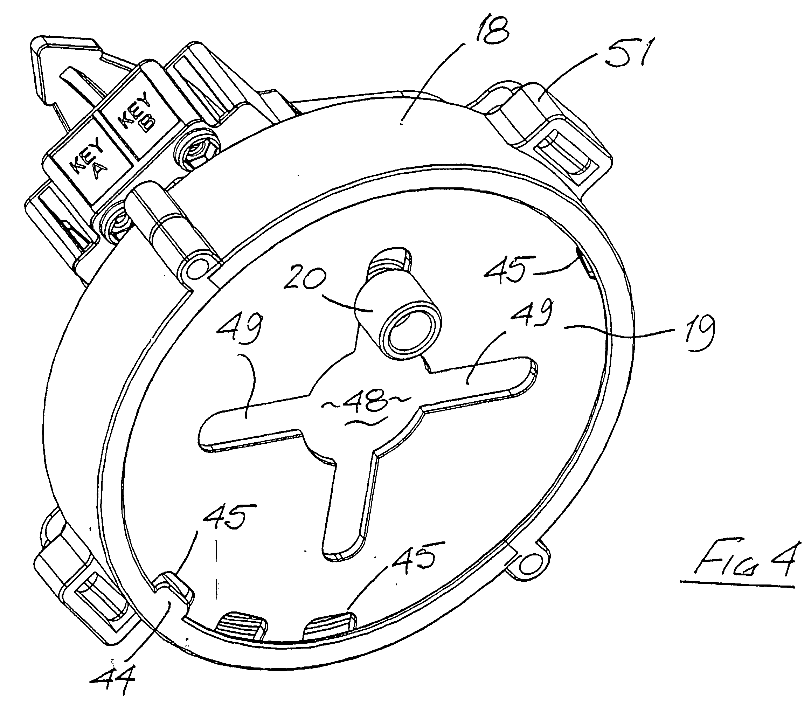

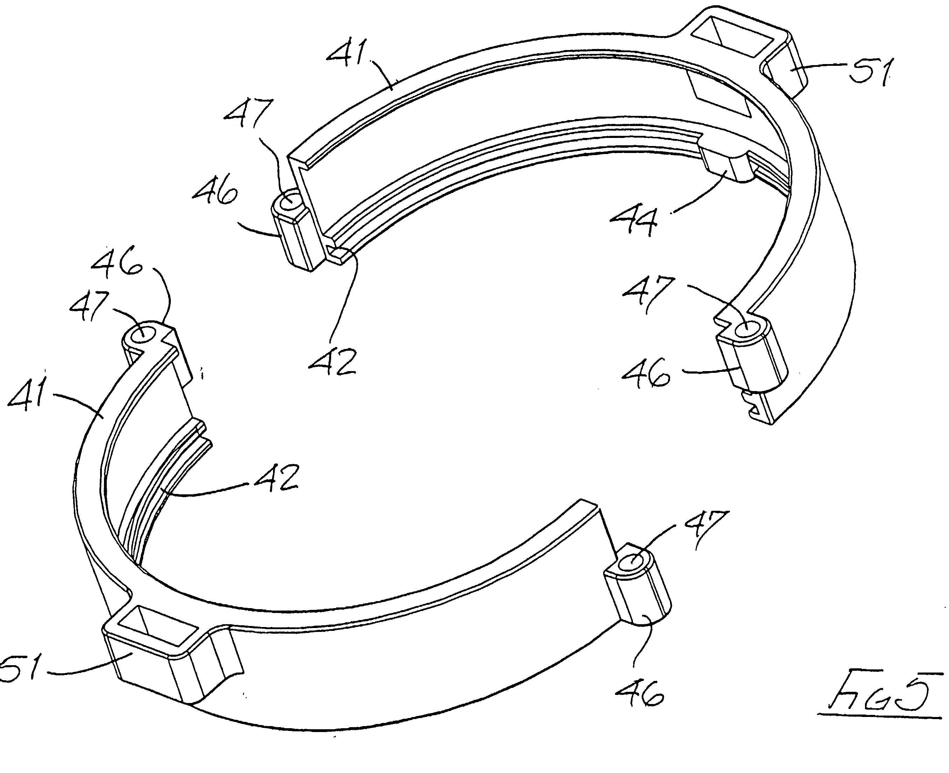

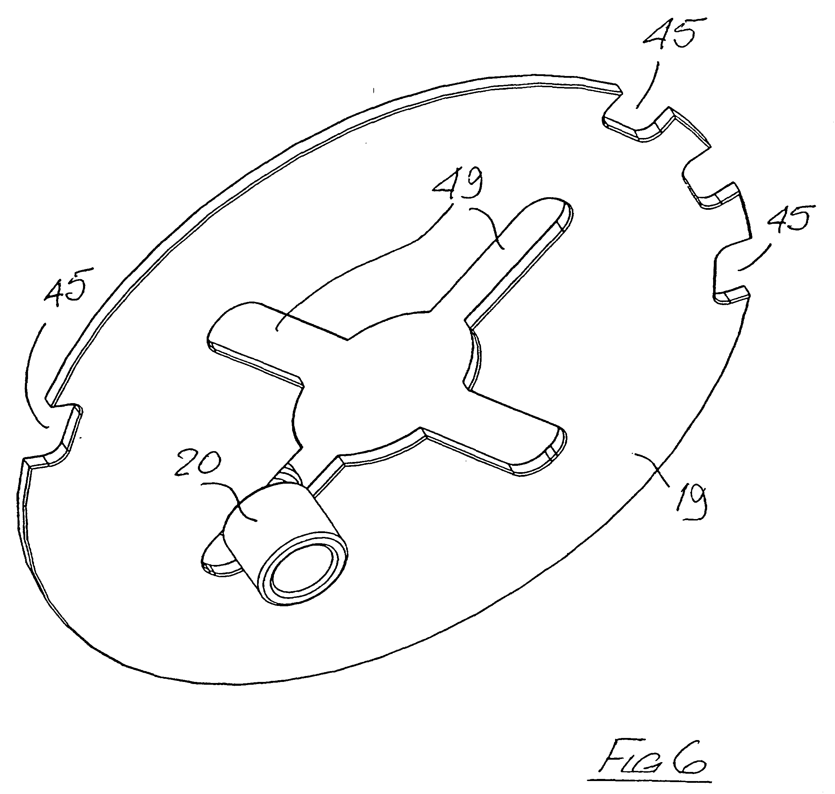

Referring now to Figures 4 to 7, there is shown in addition to the shield assembly the other components which are required to provide a valve with an interlock mechanism. The ring 18 is arranged to surround with clearance the rim portion 14 of the shield assembly, the ring having an inwardly directed flange 41 at its upper end which flange may engage on the edge of the cover portion 13. The internal lower end of the ring 18 is provided with a groove 42, in which may be received the disc 19, as shown particularly in Figures 4 and 6. The ring has an inward projection 44 in the region of the groove 42, which projection may be received in a selected notch 45 of the disc, there being a suitable number of such notches (four such notches are shown) so as to permit setting of the angular relationship between the ring and the disc.

To permit assembly of the ring 18 around the rim portion 14, the ring is formed in two elements with lugs 46 formed on the end of each element. Once the ring has been fitted around the rim portion 14, screws may be inserted through aligned bores 47 in the lugs 46, so holding the two elements together to form a continuous ring.

The disc 19 has a central aperture 48 from which radiate four slots 49. The socket 20 has an annular groove adjacent its upper end, by means of which the socket may be mounted in any one of those four slots, and may be adjusted along the length thereof. The length of the socket projecting downwardly from the disc may be selected so as to be suitable for the valve to which the interlock is to be connected, whereby the socket may span the gap between the underside of the disc and the top of the valve body or top-works with the socket engaging the head 21 of a selected bolt.

The ring 18 has on its outer periphery two diametrically opposed receptors 51 each having a rectangular opening extending parallel to the axis of the ring. The arms 17 are mounted on the lower end of the interlock mechanism by being pinned to a boss 53 formed at the lower end of the second part of the interlock mechanism. The arms project downwardly and the lower ends 54 thereof are received one in each receptor 51 respectively. In this way, when assembled as shown in Figure 1, the second part of the interlock mechanism is held against rotation with respect to the valve body by virtue of the inter-engagement of the socket 20 with bolt head 21, the location of the socket 20 in a slot 49, inter-engagement of a notch 45 in the disc with projection 44 of the ring 18, and the coupling of the ring 18 to the second part of the interlock mechanism by means of the arms 17.

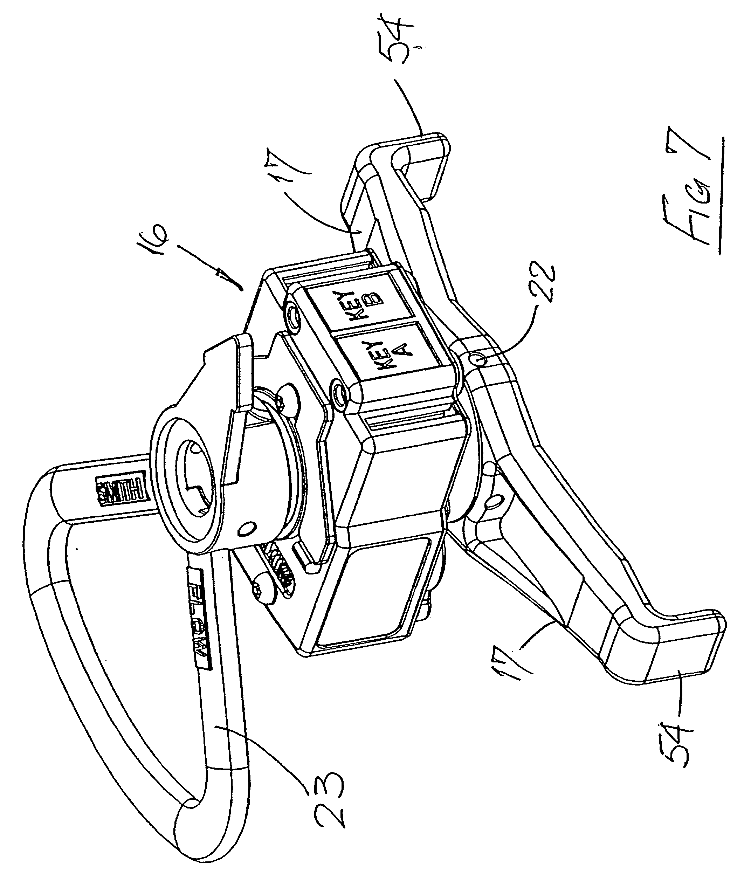

The second part of the interlock mechanism is of a known design adapted to be capable of receiving two keys identified in Figure 7 as KEY A and KEY B. Only when both keys are present is the operating lever 23 freed to permit rotation of the stub shaft 11. Moreover, a key may be removed only when the valve is either fully open or fully closed, the particular key which is removable being dependent upon the setting of the valve. Such an interlock mechanism is well known and understood in the art and forms no part of the present invention; it will not therefore be described in further detail here.

In order to fit the interlock mechanism to a valve, nut 12 is undone and the existing hand-wheel is removed so exposing the square section of the stub shaft 11. A suitable socket 20 is selected for the valve in question, and is engaged with a slot 49 in the disc 19, whereafter the disc is dropped over the stub shaft, connecting the socket to the bolt head 21. Next, the shield assembly is fitted to the stub shaft 11 by withdrawing the plungers 30 against their spring bias until the plungers are clear of the central opening 28, so permitting the base plate to be dropped over the square section of the shaft 11. The plungers are then released, so allowing the base plate to self-centre on the stub shaft 11, whereafter the screws projecting beyond the base plate are uniformly tightened, so driving the plungers hard into engagement with the square section of the stub shaft 11 without losing the co-axial disposition of the base plate with that stub shaft. In view of the square (or hexagonal) cross-section of the stub shaft, the base plate is in this way held against rotation with respect to the shaft. Once tightened, nut 12 is replaced, the projecting parts of the screws, together with their heads, are cut off closely adjacent the base plate and the cover portion 13 is lowered over the base plate and is secured thereto by means of bolts 27, clamping the assembly together and further locking the shield assembly to the stub shaft 11.

Next, the two elements of the ring 18 are fitted around the rim portion 14 of the shield assembly, locating the disc 19 in groove 42 and projection 44 in a selected notch 45. Either prior to fitting the cover portion 13 or subsequently, the first part of the interlock mechanism is secured to the upper end of the cover portion. The two arms 17 are attached by means of pins 22 to the second part of the interlock mechanism and then the second part is lowered over the first part of the mechanism engaging the lower ends of the arms into the two receptors 51. The assembly is completed by securing the operating lever 23 to the first part of the operating mechanism which retains in place the second part of that mechanism.

## Claims

1. A shield assembly for a rotatable component (11) projecting from a housing (10) and having a central hub, said shield assembly comprising a cover portion (13) adapted in use to overlie the radial extent of the component (11) on the side thereof remote from the housing (10) and a rim portion (14) adapted in use to surround the component, at least three springloaded plungers (30) mounted on the cover portion (13) for substantially radial movement and adapted in use to engage the hub under the action of the spring loading, and each plunger (30) having screw-threaded locking means (34) for locking the plunger (30) in its hub-engaging position, with the shield assembly substantially co-axial with the rotatable component (11).

2. A shield assembly as claimed in claim 1, wherein the plungers (30) are mounted on a base plate (15) connected to the cover portion (13).

3. A shield assembly as claimed in claim 2, wherein the base plate (15) has a plurality of radially-extending grooves (29), and preferably eight such grooves (29), in at least some of which are received respective plungers (30).

4. A shield assembly as claimed in claim 2 or claim 3, wherein said screw-threaded locking means for each plunger comprises a threaded rod (34) received in a threaded bore (35) provided in said base plate (15) so as to be movable radially by rotating the rod (34), the radially-inner end of the rod (34) being engageable with the respective plunger (30).

5. A shield assembly as claimed in claim 4, wherein a helical compression spring (38) is associated with each plunger (30), which spring is carried on the threaded rod (34) and acts between the plunger (30) and the base plate (15).

6. A shield assembly as claimed in any of claims 2 to 5, wherein the base plate (15) is arranged to be disposed nearer the housing (10), remote from the cover portion (13).

7. A valve lock mechanism comprising first (13,14,15) and second (16) relatively movable co-axial parts, a shield assembly as claimed in any of the preceding claims coupled to the first part of the lock mechanism and adapted in use to connect the rotatable component (11) to said first part, a bridging assembly (17,18,19) coupled to the second part of the lock mechanism and extending over the rim portion (14) of the shield assembly, and engagement means (20) for connecting the bridging assembly (17,18,19) to the housing (10) to restrain relative rotation of the bridging assembly (17,18,19) and the housing (10), the first and second parts being securable against relative rotation by use of a key configured for use with the lock mechanism.

8. A valve lock mechanism as claimed in claim 7, wherein the bridging assembly includes a ring (18) which surrounds with running clearance the rim portion (14) of the shield assembly.

9. A valve lock mechanism as claimed in claim 8, wherein the ring (18) is provided with a disc (19) arranged, in use, between the base plate (15) of the shield assembly and the housing (10), which disc (19) carries said engagement means (20).

10. A valve lock mechanism as claimed in claim 9, wherein the engagement means (20) is adjustably mounted on the disc (19), preferably by being slidably engaged with a radial slot (49) in the disc (19).

11. A valve lock mechanism as claimed in any of claims 7 to 10, wherein the ring (18) is coupled to the second part (16) of the valve lock mechanism by means of at least one arm (17) which overlies the cover portion (13) of the shield assembly.

12. A valve lock mechanism as claimed in any of claims 7 to 11, wherein the lock mechanism comprises an interlock mechanism (16) requiring the presence of two keys to free the first and second parts of the mechanism for relative rotation.

## Patentansprüche

1. Abdeckanordnung für ein drehbares Bauteil (11), das aus einem Gehäuse (10) herausragt und eine Mittennabe aufweist, wobei die Abdeckanordnung folgendes aufweist: einen Abdeckungsabschnitt (13), der angepasst ist, im Einsatz den radialen Vorsprung des Bauteils (11) an seiner abseits von dem Gehäuse (10) liegenden Seite zu überliegen, sowie einen Randabschnitt (14), der angepasst ist, im Einsatz das Bauteil zu umgeben, zumindest drei für eine im wesentlichen radiale Bewegung an dem Abdeckungsabschnitt (13) angeordnete, federbeaufschlagte Bolzen (30), die angepasst sind, im Einsatz die Nabe unter der Einwirkung der Federbeaufschlagung aufzunehmen, wobei jeder Bolzen (30) eine Gewinde-Arretiereinrichtung (34) aufweist, um den Bolzen (30) in seiner Naben-Aufnahmeposition zu arretieren, wobei die Abdeckanordnung im wesentlichen co-axial zu dem drehbaren Bauteil (11) ist.

2. Abdeckanordnung nach Anspruch 1, in welcher die Bolzen (30) an einer mit dem Abdeckungsabschnitt (13) verbundenen Basisplatte (15) angebracht sind.

3. Abdeckanordnung nach Anspruch 2, in welcher die Basisplatte (15) eine Vielzahl von sich radial erstreckenden Rillen (29), und in bevorzugter Weise acht solcher Rillen (29) aufweist, wobei in zumindest einigen der Rillen entsprechende Bolzen (30) aufgenommen werden.

4. Abdeckanordnung nach Anspruch 2 oder 3, in welcher die Gewinde-Arretiereinrichtung für jeden Bolzen einen in einer in der Basisplatte (15) vorgesehenen Gewindebohrung (35) aufgenommenen Gewindestab (34) aufweist, um derart durch Drehen des Stabes (34) radial bewegbar zu sein, wobei das radial innere Ende des Stabes (34) mit dem jeweiligen Bolzen (30) in Eingriff bringbar ist.

5. Abdeckanordnung nach Anspruch 4, in welcher eine spiralförmige Druckfeder (38) mit jedem Bolzen (30) in Zusammenhang steht, wobei die Feder auf dem Gewindestab (34) getragen wird und zwischen dem Bolzen (30) und der Basisplatte (15) tätig ist.

6. Abdeckanordnung nach einem der Ansprüche 2 bis 5, in welcher die Basisplatte (15) derart angepasst ist, um abseits von dem Abdeckungsabschnitt (13) näher an dem Gehäuse (10) angeordnet zu sein.

7. Ventil-Arretiermechanismus, der folgendes aufweist: erste (13, 14, 15) und zweite (16) relativ bewegbare, Koaxialteile bzw. Schubtriebteile, eine Abdeckanordnung nach einem der vorstehenden Ansprüche, die an dem ersten Teil des Arretier-Mechanismus angeschlossen und angepasst ist, im Einsatz das drehbare Bauteil (11) mit dem ersten Teil zu verbinden, eine Überbrückungsanordnung (17, 18, 19), die an das zweite Teil des Arretier-Mechanismus angeschlossen ist und sich über den Randabschnitt (14) der Abdeckanordnung erstreckt, und eine Eingriff-Einrichtung (20) zum Verbinden der Überbrückungsanordnung (17, 18, 19) mit dem Gehäuse (10), um eine relative Drehung der Überbrückungsanordnung (17, 18, 19) und des Gehäuses (10) zu verhindern, wobei die ersten und zweiten Teile durch Verwenden eines zur Verwendung mit dem Arretier-Mechanismus konfigurierten Schlüssels gegen eine relative Drehung verriegelbar sind.

8. Ventil-Arretiermechanismus nach Anspruch 7, in welchem die Überbrückungsanordnung einen Ring (18) enthält, der den Randabschnitt (14) der Abdeckanordnung mit einem Lauf-Zwischenraum umgibt.

9. Ventil-Arretiermechanismus nach Anspruch 8, in welchem der Ring (18) mit einer im Einsatz zwischen der Basisplatte (15) der Abdeckanordnung und dem Gehäuse (10) angeordneten Scheibe (19) versehen ist, wobei die Scheibe (19) die Eingriff-Einrichtung (20) trägt.

10. Ventil-Arretiermechanismus nach Anspruch 9, in welchem die Eingriff-Einrichtung (20) an der Scheibe (19) einstellbar angebracht ist, und zwar indem sie in bevorzugter Weise mit einem Radialschlitz (49) in der Scheibe (19) gleitbar in Eingriff steht.

11. Ventil-Arretiermechanismus nach einem der Ansprüche 7 bis 10, in welchem der Ring (18) an den zweiten Teil (16) des Ventil-Arretiermechanismus angeschlossen ist, und zwar mittels zumindest eines Arms (17), der den Abdeckungs-Abschnitt (13) der Abdeckanordnung überliegt.

12. Ventil-Arretiermechanismus nach einem der Ansprüche 7 bis 11, in welchem der Arretier-Mechanismus einen Interlock- bzw. Verriegelungs-Mechanismus (16) aufweist, der die Anwesenheit von zwei Schlüsseln erfordert, um den ersten und zweiten Teil des Mechanismus für eine relative Drehung freizugeben.

## Revendications

1. Assemblage de recouvrement pour un composant rotatif (11) faisant saillie depuis un logement (10) et comprenant un moyeu central, ledit assemblage de recouvrement comprenant une partie de couverture (13) adaptée pour couvrir , en cours d'utilisation, l'étendue radiale du composant (11) du côté de celui-ci distant du logement (10) et une partie de rive (14) adaptée pour en cours d'utilisation, entourer le composant (11), au moins trois pistons (30) sous la pression de ressorts, montés sur la partie de couverture (13), pouvant se déplacer sensiblement radialement et adaptés pour, en cours d'utilisation, venir en prise avec le moyeu sous l'action de la pression des ressorts, et chaque piston (30) ayant des moyens de verrouillage à filetage de vis (34) pour verrouiller le piston (30) dans sa position de prise avec le moyeu, l'assemblage de recouvrement étant sensiblement co-axial avec le composant rotatif (11).

2. Assemblage de recouvrement selon la revendication 1, dans lequel les pistons (30) sont montés sur une plaque de base (15) reliée à la partie de couverture (13).

3. Assemblage de recouvrement selon la revendication 2, dans lequel la plaque de base (15) a plusieurs gorges (29) s'étendant radialement, et de préférence huit de telles gorges (29), dans au moins une desquelles sont reçus des pistons (30) respectifs.

4. Assemblage de recouvrement selon la revendication 2 ou 3, dans lequel lesdits moyens de verrouillage à filetage de vis de chaque piston comprennent une barre filetée (34) reçue dans un alésage fileté (35) compris dans ladite plaque de base (15) de façon à être mobile radialement en faisant tourner la barre (34), l'extrémité radialement intérieure de la barre (34) pouvant venir en prise avec le piston respectif (30).

5. Assemblage de recouvrement selon la revendication 4, dans lequel un ressort hélicoïdal de compression (38) est associé à chaque piston (30), ressort qui est porté par la barre filetée (34) et agit entre le piston et la plaque de base.

6. Assemblage de recouvrement selon l'une quelconque des revendications 2 à 5, dans lequel la plaque de base (15) est conçue pour être disposée au plus près du logement (10), à distance de la partie de couverture.

7. Mécanisme de verrouillage d'une vanne comprenant des première (13, 14, 15) et deuxième (16) parties co-axiales capables d'un mouvement relatif, un assemblage de recouvrement selon l'une quelconque des revendications précédentes accouplé à la première partie du mécanisme de verrouillage et adapté pour, en cours d'utilisation, relier le composant rotatif (11) à ladite première partie, un assemblage de pontage (17, 18, 19) accouplé avec la deuxième partie du mécanisme de verrouillage et s'étendant par dessus la partie de rive (14) de l'assemblage de recouvrement et des moyens de prise (20) pour relier l'assemblage de pontage (17, 18, 19) avec le logement (10) pour limiter la rotation relative de l'assemblage de pontage (17, 18, 19) et du logement (10), la rotation relative des première et deuxième parties pouvant être empêchée par l'utilisation d'une clef configurée pour être utilisée avec le mécanisme de verrouillage.

8. Mécanisme de verrouillage d'une vanne selon la revendication 7, dans lequel l'assemblage de pontage comprend une bague (18) qui entoure, avec un jeu de fonctionnement, la partie de rive (14) de l'assemblage de recouvrement.

9. Mécanisme de verrouillage d'une vanne selon la revendication 8, dans lequel la bague (18) est fournie avec un disque (19) disposé, en cours d'utilisation, entre la plaque de base (15) de l'assemblage de recouvrement et le logement (10), disque qui porte lesdits moyens de prise (20).

10. Mécanisme de verrouillage d'une vanne selon la revendication 9, dans lequel les moyens de prise (20) sont montés sur le disque (19) de façon ajustable, de préférence en prise de façon coulissante avec une fente radiale (49) dans le disque (19).

11. Mécanisme de verrouillage d'une vanne selon l'une quelconque des revendications 7 à 10, dans lequel la bague (18) est accouplée avec la deuxième partie (16) du mécanisme de verrouillage de la vanne, au moyen d'au moins un bras (17) qui passe au-dessus de la partie de couverture (13) de l'assemblage de recouvrement.

12. Mécanisme de verrouillage d'une vanne selon l'une quelconque des revendications 7 à 11, dans lequel le mécanisme de verrouillage comprend un mécanisme de verrouillage mutuel (16) nécessitant la présence de deux clefs pour libérer les première et deuxième parties du mécanisme en vue de leur rotation relative.
